# EUROPEAN PATENT SPECIFICATION

(11) **EP 2 883 600 B1**
(45) Date of publication and mention of the grant of the patent: **30.10.2019**
(21) Application number: 14766381.9
(22) Date of filing: 18.06.2014
(51) Int. Cl.: B01D 71/56

(54) **MANUFACTURING OF POLYAMIDE-BASED WATER-TREATMENT SEPARATION MEMBRANE**
VERFAHREN ZUR HERSTELLUNG EINER TRENNMEMBRAN AUF POLYAMIDBASIS ZUR WASSERBEHANDLUNG
PROCÉDÉ DE FABRICATION D'UNE MEMBRANE DE SÉPARATION À BASE DE POLYAMIDE POUR LE TRAITEMENT DE L'EAU

(30) Priority: 18.06.2013 KR 20130069838
(43) Date of publication of application: 17.06.2015
(73) Proprietor: LG Chem, Ltd., Seoul 150-721 (KR)
(72) Inventor: KO, Young-Hoon, Daejeon 305-738 (KR); KIM, Jae-Hong, Daejeon 305-738 (KR); SONG, Keun-Won, Daejeon 305-738 (KR); SHIN, Chong-Kyu, Daejeon 305-738 (KR)
(74) Representative: Goddar, Heinz J.
(86) International application number: PCT/KR2014/005381
(87) International publication number: WO 2014/204218

(56) References cited:
- KR-B1- 100 551 574
- US-A- 5 582 725
- US-A1- 2007 039 874
- US-A1- 2007 175 820
- US-A1- 2012 012 527
- US-A1- 2012 241 373
- GHOSH ET AL: "Impacts of reaction and curing conditions on polyamide composite reverse osmosis membrane properties", JOURNAL OF MEMBRANE SCIENCE, ELSEVIER BV, NL, vol. 311, no. 1-2, 4 December 2007 (2007-12-04), pages 34-45, XP022487826, ISSN: 0376-7388, DOI: 10.1016/J.MEMSCI.2007.11.038
- RUI-XIN ZHANG ET AL: "Effect of the manufacturing conditions on the structure and performance of thin-film composite membranes", JOURNAL OF APPLIED POLYMER SCIENCE, vol. 125, no. 5, 5 September 2012 (2012-09-05), pages 3755-3769, XP055274928, US ISSN: 0021-8995, DOI: 10.1002/app.36542
- MARIA FERNANDA JIMENEZ SOLOMON ET AL: "High flux membranes for organic solvent nanofiltration (OSN)-Interfacial polymerization with solvent activation", JOURNAL OF MEMBRANE SCIENCE, vol. 423-424, 1 December 2012 (2012-12-01) , pages 371-382, XP055273994, NL ISSN: 0376-7388, DOI: 10.1016/j.memsci.2012.08.030

## Description

### [Technical Field]

The present disclosure relates to a polyamide water-treatment separation membrane and a method of manufacturing the same, and more particularly, to a polyamide water-treatment separation membrane having improved salt rejection rate and permeable flux properties by inducing a secondary polymerization reaction between residual unreacted portions of an acyl halide compound and an amine compound.

### [Background Art]

Recently, the development of novel water resources and water supply sources has come to the fore as an urgent issue due to severe levels of water contamination and water shortages worldwide. Research into the contamination of water is aimed at processing water for domestic, commercial and industrial uses, various types of domestic sewage, industrial waste water and the like. Water-treatment processes, using separation membranes having advantages in terms of energy savings, have come to prominence. Further, the enforcement of environmental regulations increasing in recent times, may allow for the advanced activation of separation membrane technologies. In meeting the requirements of such environmental regulations, traditional water-treatment processes may be insufficient; however, since separation membrane technologies may ensure superior processing efficiency and stable treatment processes, they are expected to become leading technologies in the field of water treatment going into the future.

Liquid separation methods may be classified as a micro-filtration method, an ultra-filtration method, a nano-filtration method, a reverse osmosis method, a stannizing method, an active transportation method, an electrodialysis method and the like. Among these methods, the reverse osmosis method may be a desalinization process using a semipermeable membrane enabling water to penetrate therethrough while not allowing salts to penetrate therethrough. When high pressure water in which salts are dissolved is introduced to one surface of the semipermeable membrane, ultrapure water from which salts are removed may be discharged through the other surface of the semipermeable membrane at low pressure.

Lately, worldwide, about a billion gallons of water are subjected to a desalinization process through a reverse osmosis method every day. Since the first desalinization process using reverse osmosis was disclosed in the 1930s, a considerable amount of research into semipermeable membrane materials has been conducted in the field thereof. Here, research into asymmetric cellulose membranes and polyamide composite membranes has become prominent in terms of commercial viability. Since cellulose membranes developed in the early stage of reverse osmosis membrane technological development may be disadvantageous in that they have relatively narrow operable pH ranges, are easily deformed at high temperatures, require high operational costs due to the use of high pressure and are vulnerable to microbes, they have been rarely used in recent times.

Meanwhile, a polyamide composite membrane may be prepared by forming a polysulfone layer on a non-woven fabric to form a microporous support, dipping the microporous support in an aqueous m-phenylene diamine (mPD) solution to form an mPD layer, and dipping or coating the mPD layer in or with an organic trimesoyl chloride (TMC) solvent to allow the mPD layer to be brought into contact with the TMC so as to be interfacially polymerized to thereby form a polyamide layer. A nonpolar solution and a polar solution may come into contact with each other, whereby the polymerization may only be generated in the interface to thereby form a polyamide layer having a significantly small thickness. Since polyamide composite membranes have high levels of stability with respect to pH variations, are operable under low degrees of pressure, and have superior salt rejection rates, as compared to existing asymmetric cellulose membranes, they are now mainly provided as water-treatment separation membranes.

Meanwhile, such a water treatment membrane needs to satisfy several conditions so as to be used for commercial purposes, and one of the conditions is a high salt rejection rate. A commercially required salt rejection rate of the water treatment membrane may be at least 97% or more in brackish water. Another crucial property of the water treatment membrane may be a capability of allowing a relatively large amount of water to penetrate therethrough at a relatively low pressure, that is, a high permeable flux. However, since an oppositional relationship may exist between the salt rejection rate and the permeable flux properties, the manufacturing of a water treatment membrane having a superior salt rejection rate as well as a high permeable flux may be infeasible in practice.

In addition, the suggested water-treatment separation membrane has limitations in that a replacement period of the membrane is short due to a high degree of reduction in chlorine resistance of the water-treatment separation membrane over time. Therefore, in order to decrease the degree of reduction in chlorine resistance of the water-treatment separation membrane, a method of increasing a specific surface area of an active layer has been suggested. Japanese Patent Laid-Open Publication No. H10-337454 discloses that an active layer is formed and subsequently, a separation membrane including the active layer is dipped in an acidic solution to form unevenness or wrinkles in a skin layer surface thereof in order to increase a specific surface area of the skin layer of the membrane. Korean Patent Laid-Open Publication No. 1998-0068304 discloses a method of increasing surface roughness of a separation membrane by performing post-treatment using a high degree of acid, after the manufacturing of the separation membrane.

However, as disclosed in Japanese Patent Laid-Open Publication No. H10-337454, in a case in which the membrane including the active layer is dipped in an acidic solution, a negative charge may be present in the surface of the membrane, such that a contaminant material having a positive charge may be adhered to the membrane to thereby result in a reduction in a permeable flux of the membrane. Accordingly, a separate post-treatment process for coating the surface of the membrane with an electrically neutral polymer needs to be performed.

Ghosh et al (Journal of membrane science, vol. 311, no. 1-2, pages 34-45) and Zhang et al (Journal of applied polymer science, vol. 125, no. 5, pages 3755-3769) disclose different thin-film composite membranes comprising a polyamide separation layer for use as reverse osmosis membranes.

Solomon et al (Journal of membrane science, vol. 423-424, pages 371-382) discloses thin-film composite membranes comprising a polyamide separation layer for use in organic solvent nanofiltration, post-treated with different organic solvents after the interfacial polymerization process.

### [Disclosure]

### [Technical Problem]

An aspect of the present disclosure provides a polyamide water-treatment separation membrane having an improved salt rejection rate together with enhanced permeable flux properties by inducing a secondary polymerization reaction between residual portions of an acyl halide compound and an amine compound remaining on a surface of a polyamide active layer through a process of coating a second organic solvent having a low degree of volatility on the polyamide active layer, after the polymerization and formation of the polyamide active layer.

### [Technical Solution]

According to an aspect of the present disclosure, there is provided a method of manufacturing a water-treatment separation membrane, the method including: forming an aqueous solution layer containing an amine compound on a porous support; forming a polyamide active layer by bringing an organic solution containing an acyl halide compound and a first organic solvent into contact with the aqueous solution layer; and coating a second organic solvent having a degree of volatility lower than that of the first organic solvent on the polyamide active layer.

The coating of the second organic solvent on the polyamide active layer includes forming a polyamide through an additional interfacial polymerization reaction between residual portions of the acyl halide compound and the amine compound remaining on the polyamide active layer.

The first and second organic solvents are nonpolar solvents.

A vapor pressure of the first organic solvent at 20 °C may be 5kPa to 60kPa, and a vapor pressure of the second organic solvent at 20 °C may be 0.05kPa to 1.5kPa.

The first organic solvent is at least one selected from a group consisting of pentane, hexane, and heptane, and the second organic solvent is at least one selected from a group consisting of octane, nonane, decane, undecane, dodecane and an isoparaffin solvent, a mixture of alkanes having 8 to 15 carbon number.

According to another aspect of the present disclosure, there is provided a water-treatment separation membrane comprising: a porous support; and a polyamide active layer formed on the porous support, wherein the polyamide active layer is formed by forming an aqueous solution layer containing an amine compound on the porous support, bringing an organic solution containing an acyl halide compound and a first organic solvent into contact with the aqueous solution layer, and then, coating a second organic solvent having a degree of volatility lower than that of the first organic solvent.

In a case in which a sodium chloride (NaCl) solution at a concentration of 32,000ppm permeates through the water-treatment separation membrane under pressure conditions of 800psi, the water-treatment separation membrane may have an initial salt rejection rate of 99.00% or more and an initial permeable flux of 34 to 40 gallons/ft²·day.

After an aqueous sodium hypochlorite (NaOCl) solution at a concentration of 2,000ppm permeates through the water-treatment separation membrane for 12 hours, the water-treatment separation membrane may have a salt rejection rate of 98.00% or more and a permeable flux of 32 to 40 gallons/ft²·day.

A thickness of the polyamide active layer may be 110 to 180nm.

According to another aspect of the present disclosure, there are provided a water-treatment module including at least one water-treatment separation membrane as described above and at least one water-treatment module as described above.

### [Advantageous Effects]

A water-treatment separation membrane having a polyamide active layer formed through a secondary polymerization reaction caused by additionally coating a second organic solvent having a low degree of volatility on the polyamide active layer, after the polymerization and formation of the polyamide active layer using a first organic solvent having a high degree of volatility, may have a superior salt rejection rate and high permeable flux properties.

### [Best Mode]

Hereinafter, exemplary embodiments of the present disclosure will now be described in detail with reference to the accompanying drawings.

As a result of repeated research undertaken in order to develop a water-treatment separation membrane having superior salt rejection rate and permeable flux properties, the inventors of the present disclosure found that a water-treatment separation membrane having an improved salt rejection rate together with enhanced permeable flux properties may be obtained by generating an additional interfacial polymerization reaction through coating an organic solvent having relatively low volatility on a polyamide active layer, after the formation of the polyamide active layer using another organic solvent having relatively high volatility, and completed the present disclosure.

More specifically, a water-treatment separation membrane according to an exemplary embodiment of the present disclosure may be manufactured by a method including: forming an aqueous solution layer containing an amine compound on a porous support; forming a polyamide active layer by bringing an organic solution containing an acyl halide compound and a first organic solvent into contact with the aqueous solution layer; and coating a second organic solvent having a degree of volatility lower than that of the first organic solvent on the polyamide active layer.

First, in the forming of the aqueous solution layer containing the amine compound on the porous support, the porous support may be formed by coating a polymer material on a non-woven fabric and examples of the polymer material may include polysulfone, polyether sulfone, polycarbonate, polyethylene oxide, polyimide, polyether imide, polyether ether ketone, polypropylene, polymethylpentene, polymethylchloride, polyvinylidene fluoride, and the like, but are not limited thereto. Among these, the polymer material may be, particularly, polysulfone.

In this case, in the aqueous solution layer containing the amine compound, types of the amine compound are not limited, as long as they may be used in manufacturing a water-treatment separation, but the amine compound may preferably be, for example, m-phenylenediamine, p-phenylenediamine, 1,3,6-benzene triamine, 4-chloro-1,3-phenylenediamine, 6-chloro-1,3-phenylenediamine, 3-chloro-1,4-phenylenediamine or mixtures thereof.

A method of forming the aqueous solution layer containing the amine compound on the porous support is not particularly limited and any method may suitably be used in embodiments of the present disclosure, as long as it may form an aqueous solution layer on a support. For example, a spraying method, a coating method, a dipping method, a dropping method or the like may be usable.

Here, the aqueous solution layer may be additionally subjected to a process of removing an excessive amount of the aqueous solution containing the amine compound, if necessary. In the aqueous solution layer formed on the porous support, in a case in which an excessive amount of the aqueous solution is present on the porous support, distribution of the aqueous solution may be non-uniform. In the case of the non-uniform distribution of the aqueous solution, a non-uniform polyamide active layer may be formed due to the subsequent interfacial polymerization. Thus, after the aqueous solution layer is formed on the support, the removal of the excessive amount of the aqueous solution may be preferable. The excessive amount of the aqueous solution may be removed by for example, a sponge, an air knife, nitrogen-gas blowing, natural drying, a pressing roll.

Next, a process of forming the polyamide active layer by bringing the organic solution containing the acyl halide compound and the first organic solvent into contact with the aqueous solution layer may be performed. Here, the amine compound coated on the surface of the porous support and the acyl halide compound may react with each other to generate a polyamide through the interfacial polymerization therebetween, and the polyamide may be adsorbed onto the microporous support to form a thin film. In the contact method, the polyamide active layer may be formed by a dipping method, a spraying method, a coating method.

In this case, the acyl halide compound, an aromatic compound having two to three carboxylic acid halides may be a mixture of at least one selected from a group consisting of trimesoyl chloride, isophthaloyl chloride, and terephthaloyl chloride.

Here, in a process of forming the water-treatment separation membrane, in general, the organic solvent of the solution containing the acyl halide compound may be a solvent that neither participates in the interfacial polymerization reaction nor causes a chemical bond with the acyl halide compound as well as not causing damage to the porous support layer. As the organic solvent, an aliphatic hydrocarbon solvent, for example, Freon, and a hydrophobic liquid unmixed with water such as hexane having 5 to 12 carbon number, cyclohexane, heptane or alkane, for example, alkanes having 5 to 12 carbon number and mixtures thereof such as IsoPar(Exxon), ISOL-C(SK Chem), ISOL-G(Exxon) or the like may be used. However, the organic solvents are as defined in the claims.

Next, the method of manufacturing the water-treatment separation membrane includes a process of additionally coating the second organic solvent having a degree of volatility lower than that of the first organic solvent on the polyamide active layer formed through the interfacial polymerization by bringing the amine compound and the acyl halide compound into contact with each other as described above. In this manner, after the polyamide active layer is formed through the interfacial polymerization, another organic solvent having relatively low volatility may be used, whereby a high-roughness polyamide may be additionally generated.

That is, the second organic solvent having a degree of volatility lower than that of the first organic solvent is be coated on the polyamide active layer to cause an additional interfacial polymerization reaction between unreacted portions of the acyl halide compound and the amine compound remaining on the polyamide active layer, thereby generating the polyamide.

The first organic solvent and the second organic solvent are nonpolar solvents. This is due to the fact that the nonpolar solvent may be rarely mixed with the aqueous solution containing the amine compound and may facilitate the dissolution of the acyl halide compound, during the polyamide polymerization.

The first organic solvent is a solvent having a degree of volatility higher than that of the second organic solvent.

Specifically, a vapor pressure of the first organic solvent at 20 °C may be 5kPa to 60kPa and a vapor pressure of the second organic solvent at 20 °C may be 1.5kPa or less or 0.05kPa to 1.5kPa. In a case in which values of the vapor pressure of the first and second organic solvents satisfy the ranges, it could be confirmed that both of the salt rejection rate and permeable flux properties may be simultaneously improved.

The first organic solvent is at least one selected from a group consisting of pentane, hexane, and heptane, and the second organic solvent is at least one selected from a group consisting of octane, nonane, decane, undecane, dodecane and an isoparaffin solvent which is a mixture of alkanes having 8 to 15 carbon number.

The isoparaffin solvent, a mixture of alkanes having 8 to 15 carbon number, may be for example, isopar C, isopar G, isopar E.

In the process, in detail, after the organic solution containing the acyl halide compound and the first organic solvent is brought into contact with the aqueous solution layer containing the amine compound by the method as described above to form the polyamide active layer and subsequently, the solvent of the organic solution firstly used is entirely volatilized, the second solvent is additionally coated on the polyamide active layer. In this case, a secondary interfacial polymerization between an unreacted portion of the amine compound and a residual portion of the acyl halide compound present on the polyamide active layer is caused, or an additional polymerization reaction between unreacted groups of the already formed polyamide layer may be generated.

According to the related art, a polyamide active layer is generally formed by only coating an organic solution containing an acyl halide compound on an aqueous solution layer containing an amine compound and in this case, an organic solvent having 8 or more carbon number may mainly be used. This is because that in a case in which a degree of volatility of the organic solution containing the acyl halide compound is high, the reaction may be rapidly terminated due to the volatilization of the organic solvent to deteriorate the degree of polymerization of polyamide, and an insufficient reaction may be generated, leading to partially unreacted portions. Consequently, a polyamide active layer having a low salt rejection rate but a high permeable flux rate may be formed.

On the other hand, according to an exemplary embodiment of the present disclosure, after a primary coating operation is performed using an organic solution containing an organic solvent having relatively high volatility, a secondary coating operation is additionally undertaken using a second organic solvent having relatively low volatility, whereby residual portions of the acyl halide compound and the amine compound remaining on the surface of the polyamide active layer after the primary coating operation forms the secondary interfacial polymerization within the second organic solvent. In this case, the secondary interfacial polymerization may be performed in the unreacted portions caused by rapid volatilization of the first organic solvent, rather than in a termination portion in which the interfacial polymerization has already been terminated, thereby performing a complementary action partially covering a region in which the degree of polymerization of polyamide is deteriorated. Consequently, space in which an insufficient amount of polyamide is formed through the reaction using the first organic solvent, on the support, may be filled and ultimately, a significantly improved salt rejection rate may be obtained.

On the contrary to this, in the case of existing processes in which an interfacial polymerization reaction is generated only using an organic solvent having a low degree of volatility, a satisfiable salt rejection rate may be exhibited due to a sufficient interfacial polymerization reaction, but density of the correspondingly formed polyamide active layer may be relatively high, thereby resulting in a lowering of the initial permeable flux. However, in the case of the water-treatment separation membrane manufactured by the manufacturing method according to an exemplary embodiment of the present disclosure, since an interfacial polymerization reaction may be generated by using the first organic solvent having high volatility to form a polyamide active layer basically having a low degree of density, thereby allowing for high permeable flux, as compared to the case of only using an organic solvent having a low degree of volatility.

Meanwhile, when the polyamide active layer is formed on the porous support through the processes as described above, drying and washing processes may be selectively performed. In this case, the drying process may be performed for approximately 1 to 10 minutes in an oven at a temperature of 45°C to 80°C. In addition, the washing process is not particularly limited, but may be performed in an alkaline aqueous solution, for example. A usable alkaline aqueous solution is not particularly limited but may be an aqueous sodium carbonate solution. Specifically, the washing process may be performed in the aqueous sodium carbonate solution at a temperature of 20°C to 30°C for 1 to 24 hours.

Meanwhile, a thickness of the polyamide active layer may be 100 to 200nm, preferably 110 to 180nm, more preferably 130 to 150nm. Roughness of the polyamide active layer is considerably high. Thus, in a case in which thickness of the polyamide active layer is less than 100nm, possibility that the polyamide active layer may not be coated on the entirety of the porous support may be high. In a case in which thickness of the polyamide active layer is greater than 200nm, possibility that the polyamide active layer may be unevenly formed may be high.

In addition, according to an exemplary embodiment of the present disclosure, a water-treatment separation membrane manufactured by the manufacturing method according to an embodiment of the present disclosure may be provided.

Specifically, the water-treatment separation membrane according to an exemplary embodiment of the present disclosure may include: a porous support; and a polyamide active layer formed on the porous support, wherein the polyamide active layer is formed by forming an aqueous solution layer containing an amine compound on the porous support, bringing an organic solution containing an acyl halide compound and a first organic solvent into contact with the aqueous solution layer, and then, coating a second organic solvent having a degree of volatility lower than that of the first organic solvent.

The respective components of the water-treatment separation membrane according to an exemplary embodiment of the present disclosure are identical to those as described above.

In this case, since the first organic solvent and the second organic solvent are identical to those as described above, a detailed description thereof will be omitted.

Here, in a case in which a sodium chloride (NaCl) solution at a concentration of 32,000ppm permeates through the water-treatment separation membrane under pressure conditions of 800psi, the water-treatment separation membrane may have an initial salt rejection rate of approximately 99.00% or more and an initial permeable flux of approximately 34 to 40 gallons/ft²·day.

After an aqueous sodium hypochlorite (NaOCl) solution at a concentration of 2,000ppm permeates through the water-treatment separation membrane for 12 hours, the water-treatment separation membrane may have a salt rejection rate of approximately 98.00% or more and a permeable flux of approximately 32 to 40 gallons/ft²·day.

In this case, in the water-treatment separation membrane, the thickness of the polyamide active layer may be 110 to 180nm.

Meanwhile, the water-treatment separation membrane including the constitutions may be used in a micro-filtration method, an ultra-filtration method, a nano-filtration method, or a reverse osmosis method, and may preferably be used in the reverse osmosis method.

In addition, according to an exemplary embodiment of the present disclosure, a water-treatment module including at least one water-treatment separation membrane according to the foregoing exemplary embodiment of the present disclosure as described above may be provided.

Concrete types of the water-treatment module according to the exemplary embodiment of the present disclosure are not particularly limited; however, examples thereof may include plate and frame modules, a tubular module, hollow and fiber modules, a spiral wound module and the like.

Meanwhile, since the water-treatment module according to an exemplary embodiment of the present disclosure may have superior salt rejection rate and permeable flux properties and may be chemically stable, it may be usefully used in a water-treatment device such as a domestic/industrial water-purifying device, a sewage treatment device, a seawater-fresh water-treatment device.

### [Mode for Disclosure]

### <Inventive Example 1>

18wt% of a polysulfone solid was added to a DMF (N,N-dimethylformamide) solution and dissolved therein at a temperature of 80°C to 85°C for 12 or more hours to obtain a uniform liquid phase. The solution having the uniform liquid phase was cast on a non-woven fabric having a thickness of 95 to 100µm and formed of a polyester material, at a thickness of 45 to 50µm. Then, the cast non-woven fabric was placed in water to form a porous polysulfone support.

After the porous polysulfone support manufactured by the method described above was dipped in an aqueous solution containing 2wt% of m-phenylene diamine, 1wt% of triethylamine, and 2.3wt% of camphor sulfonic acid for 2 minutes and was taken out therefrom, an excessive amount of the aqueous solution on the support was removed therefrom using a roller under 25psi of pressure and the porous polysulfone support was then dried for 1 minute at room temperature.

Thereafter, an organic solution containing a first organic solvent, n-Hexane(manufactured by Sigma Aldrich), and 0.2% by volume of trimesoyl chloride (TMC) was coated on a surface of the coated support to conduct an interfacial polymerization reaction. In this case, after the solvent of the firstly coated organic solution was entirely volatilized, a second organic solvent, Isopar C, was consecutively coated to conduct another interfacial polymerization reaction and subsequently, a drying process was performed thereon in an oven at 60 °C for 10 minutes.

After a water-treatment separation membrane obtained by the method as described above was immersed in 0.2wt% of an aqueous sodium carbonate solution for two or more hours and then washed with distilled water for 1 minute, a water-treatment separation membrane including a polyamide active layer was manufactured.

### <Inventive Example 2>

A water-treatment separation membrane was manufactured using the same method as that of Inventive Example 1, with the exception that Isopar G was used as the second organic solvent.

### <Inventive Example 3>

A water-treatment separation membrane was manufactured using the same method as that of Inventive Example 1, with the exception that Isopar E was used as the second organic solvent.

### <Inventive Example 4>

A water-treatment separation membrane was manufactured using the same method as that of Inventive Example 1, with the exception that n-Heptane was used as the first organic solvent and Isopar C was used as the second organic solvent.

### <Inventive Example 5>

A water-treatment separation membrane was manufactured using the same method as that of Inventive Example 1, with the exception that n-Heptane was used as the first organic solvent and Isopar G was used as the second organic solvent.

### <Inventive Example 6>

A water-treatment separation membrane was manufactured using the same method as that of Inventive Example 1, with the exception that n-Heptane was used as the first organic solvent and Isopar E was used as the second organic solvent.

### <Comparative Example 1>

A water-treatment separation membrane was manufactured using the same method as that of Inventive Example 1, with the exception that n-Hexane was used as the first organic solvent, and the process of consecutively coating the second organic solvent and the drying process were omitted.

### <Comparative Example 2>

A water-treatment separation membrane was manufactured using the same method as that of Inventive Example 1, with the exception that n-Heptane was used as the first organic solvent, and the process of consecutively coating the second organic solvent and the drying process were omitted.

### <Comparative Example 3>

A water-treatment separation membrane was manufactured using the same method as that of Inventive Example 1, with the exception that an organic solution using Isopar C as the first organic solvent was coated on the surface of the coated support to cause an interfacial polymerization reaction, and subsequently, the drying process was performed thereon, without the process of consecutively coating the second organic solvent.

### <Comparative Example 4>

A water-treatment separation membrane was manufactured using the same method as that of Inventive Example 1, with the exception that an organic solution using Isopar G as the first organic solvent was coated on the surface of the coated support to cause an interfacial polymerization reaction, and subsequently, the drying process was performed thereon, without the process of consecutively coating the second organic solvent.

### <Comparative Example 5>

A water-treatment separation membrane was manufactured using the same method as that of Inventive Example 1, with the exception that an organic solution using Isopar E as the first organic solvent was coated on the surface of the coated support to cause an interfacial polymerization reaction, and subsequently, the drying process was performed thereon, without the process of consecutively coating the second organic solvent.

### <Comparative Example 6>

18wt% of a polysulfone solid was added to a DMF (N,N-dimethylformamide) solution and dissolved therein at a temperature of 80°C to 85°C for 12 or more hours to obtain a uniform liquid phase. The solution having the uniform liquid phase was cast on a non-woven fabric having a thickness of 95 to 100µm and formed of a polyester material, at a thickness of 45 to 50µm. Then, the cast non-woven fabric was placed in water to form a porous polysulfone support.

After the porous polysulfone support manufactured by the method as described above was dipped in an aqueous solution containing 2wt% of m-phenylene diamine, 1wt% of triethylamine, and 2.3wt% of camphor sulfonic acid for 2 minutes and was taken out therefrom, an excessive amount of the aqueous solution on the support was removed therefrom using a roller under 25psi of pressure and the porous polysulfone support was then dried for 1 minute at room temperature.

Thereafter, after an organic solution containing Isopar C and 0.2% by volume of trimesoyl chloride (TMC) as solvents was coated on a surface of the coated support to conduct an interfacial polymerization reaction, a drying process was performed thereon in an oven at 60°C for 5 minutes. Next, as a second organic solvent, n-Hexane was used and coated and subsequently, another drying process was performed thereon in the oven at 60°C for 5 minutes.

After a water-treatment separation membrane obtained by the method as described above was immersed in 0.2wt% of an aqueous sodium carbonate solution for two or more hours and then washed with distilled water for 1 minute, a water-treatment separation membrane including a polyamide active layer was manufactured.

### <Comparative Example 7>

A water-treatment separation membrane was manufactured using the same method as that of Comparative Example 6, with the exception that Isopar C was used as the first organic solvent and n-Heptane was used as the second organic solvent.

### <Comparative Example 8>

A water-treatment separation membrane was manufactured using the same method as that of Comparative Example 6, with the exception that Isopar G was used as the first organic solvent and n-Hexane was used as the second organic solvent.

### <Comparative Example 9>

A water-treatment separation membrane was manufactured using the same method as that of Comparative Example 6, with the exception that Isopar G was used as the first organic solvent and n-Heptane was used as the second organic solvent.

### <Experimental Example 1 - Measurement of Initial Salt Rejection Rates and Initial Permeable fluxes>

Initial salt rejection rates and Initial permeable fluxes were estimated with respect to the water-treatment separation membranes manufactured according to the Inventive Examples 1 to 6 and Comparative Examples 1 to 9, using the following method. The initial salt rejection rates and the initial permeable fluxes were measured while 32,000 ppm of an aqueous sodium chloride (NaCl) solution was supplied with a flux of 4500mL/min at a temperature of 25°C. A water-treatment separation membrane cell apparatus used in membrane evaluation included a flat panel type permeation cell, a high pressure pump, a reservoir, and a cooling device. The flat panel type permeation cell had a cross-flow structure and an effective permeation area thereof was 28 cm². After each water-treatment separation membrane that had been washed was installed on the permeation cell, a preliminary operation was sufficiently conducted, using tertiary distilled water for about 1 hour in order to stabilize the evaluation equipment. Next, after the tertiary distilled water was substituted with 32,000 ppm of an aqueous sodium chloride (NaCl) solution and an equipment operation was conducted for about 1 hour until pressure and permeable flux reached a normal state, an amount of water permeated for 10 minutes was measured to calculate the flux, and salt concentrations before and after the permeation were analyzed using a conductivity meter to calculate the salt rejection rate. The measurement results are shown in the following [Table 1].

**[Table 1]**

| Classification | First organic solvent | Second organic solvent | Salt rejection rate (%) | Permeable flux (gallon/ft²·day) |
|---|---|---|---|---|
| Inventive Example 1 | n-Hexane | Isopar C | 99.18 | 37.62 |
| Inventive Example 2 | n-Hexane | Isopar G | 99.38 | 37.21 |
| Inventive Example 3 | n-Hexane | Isopar E | 99.44 | 37.18 |
| Inventive Example 4 | n-Heptane | Isopar C | 99.23 | 35.01 |
| Inventive Example 5 | n-Heptane | Isopar G | 99.35 | 35.57 |
| Inventive Example 6 | n-Heptane | Isopar E | 99.41 | 34.95 |
| Comparative Example 1 | n-Hexane | - | 98.55 | 37.70 |
| Comparative Example 2 | n-Heptane | - | 98.77 | 35.71 |
| Comparative Example 3 | Isopar C | - | 99.20 | 30.73 |
| Comparative Example 4 | Isopar G | - | 99.37 | 29.98 |
| Comparative Example 5 | Isopar E | - | 99.45 | 27.34 |
| Comparative Example 6 | Isopar C | n-Hexane | 99.22 | 29.92 |
| Comparative Example 7 | Isopar C | n-Heptane | 99.28 | 29.37 |
| Comparative Example 8 | Isopar G | n-Hexane | 99.38 | 29.38 |
| Comparative Example 9 | Isopar G | n-Heptane | 99.38 | 28.92 |

Referring to the results of [Table 1], comparing Inventive Examples 1 to 6 with Comparative Examples 1 to 5, it could be confirmed that in the case of Inventive Examples 1 to 6, permeable flux values were similar but salt rejection rates were significantly increased as compared to those of Comparative Examples 1 and 2 in which only organic solvents having high volatility were used. In addition, it could be confirmed that in the case of Inventive Examples 1 to 6, salt rejection rates were similar but permeable flux values were significantly increased as compared to those of Comparative Examples 3 to 5 in which only organic solvents having low volatility, which are generally used to form a polyamide active layer, were used.

Furthermore, in the case of Comparative Examples 6 to 9, it could be confirmed that when an organic solvent having low volatility was used as a primary solvent and an organic solvent having high volatility was used as a secondary solvent, similar behavior properties to those of Comparative Examples 3 to 5 were exhibited, and effects of simultaneously improving salt rejection rate and permeable flux properties as in the exemplary embodiments of the present disclosure could not be confirmed.

Thus, in the case of the water-treatment separation membrane manufactured by the manufacturing method according to the exemplary embodiment of the present disclosure, only a process of additionally coating an organic solvent is provided in the manufacturing method thereof, without a complex post-treatment process, whereby both the salt rejection rate and the level of permeable flux, in an oppositional relationship, may be excellent in the water-treatment separation membrane.

### <Experimental Example 2 - Measurement of Chlorine Resistance Over Time>

Chlorine resistance properties of the water-treatment separation membranes manufactured according to Inventive Example 2 and Comparative Example 4 were estimated. After initial salt rejection rates and initial permeable fluxes were measured under a pressure of 800psi, using an aqueous mixed solution containing 32,000 ppm of an aqueous sodium chloride (NaCl) solution and 2,000 ppm of sodium hypochlorite (NaOCl), salt rejection rates and permeable fluxes were measured after 6 hours and 12 hours were elapsed subsequently to the measurement. The measured results are shown in the following [Table 2].

**[Table 2]**

| | Salt Rejection Rate (%) | | | Permeable Flux(gallon/ft²·day) | | |
|---|---|---|---|---|---|---|
| | Immediately after introduction of NaOCl | After 6 hours elapsed subsequently to exposure to NaOCl | After 12 hours elapsed subsequently to exposure to NaOCl | Immediately after introduction of NaOCl | After 6 hours elapsed subsequently to exposure to NaOCl | After 12 hours elapsed subsequently to exposure to NaOCl |
| Inventive Example 2 | 99.38 | 99.21 | 99.11 | 37.21 | 38.85 | 39.07 |
| Comparative Example 4 | 99.37 | 99.19 | 99.12 | 29.98 | 30.01 | 30.22 |

Referring to the results of [Table 2], it could be confirmed that degrees of reduction in chlorine resistance over time were similar in Inventive Example 2 and Comparative Example 4. That is, in the case of the water-treatment separation membranes manufactured according to the exemplary embodiment of the present disclosure, it could be confirmed that chlorine resistance properties over time were equivalent and at the same time, superior permeable flux properties were exhibited.

## Claims

1. A method of manufacturing a water-treatment separation membrane, the method comprising:
forming an aqueous solution layer containing an amine compound on a porous support;
forming a polyamide active layer by bringing an organic solution containing an acyl halide compound and a first organic solvent into contact with the aqueous solution layer; and
coating a second organic solvent having a degree of volatility lower than that of the first organic solvent on the polyamide active layer,
wherein the coating of the second organic solvent on the
polyamide active layer includes forming a polyamide through an additional interfacial polymerization reaction between residual portions of the acyl halide compound and the amine compound remaining on the polyamide active layer,
wherein the first organic solvent is at least one selected from a group consisting of pentane, hexane, and heptane, and the second organic solvent includes at least one selected from a group consisting of octane, nonane, decane, undecane, dodecane and an isoparaffin solvent, a mixture of alkanes having 8 to 15 carbon number.

2. The method of claim 1, wherein the first and second organic solvents are nonpolar solvents.

3. The method of claim 1, wherein a vapor pressure of the first organic solvent at 20°C is 5kPa to 60kPa, and a vapor pressure of the second organic solvent at 20°C is 0.05kPa to 1.5kPa.

## Patentansprüche

1. Verfahren zum Herstellen einer Wasserbehandlungstrennmembran, wobei das Verfahren umfasst:
Bilden einer wässrigen Lösungsschicht enthaltend eine Aminverbindung auf einem porösen Träger;
Bilden einer Polyamidaktivschicht durch Inkontaktbringen einer organischen Lösung enthaltend eine Acylhalogenidverbindung und ein erstes organisches Lösungsmittel mit der wässrigen Lösungsschicht; und
Beschichten eines zweiten organischen Lösungsmittels mit einem Flüchtigkeitsgrad, der niedriger ist als derjenige des ersten organischen Lösungsmittels, auf die Polyamidaktivschicht,
wobei das Beschichten des zweiten organischen Lösungsmittels auf der Polyamidaktivschicht ein Bilden eines Polyamids durch eine zusätzliche Grenzflächenpolymerisationsreaktion zwischen Restteilen der Acylhalogenidverbindung und der Aminverbindung verbleibend auf der Polyamidaktivschicht einschließt,
wobei das erste organische Lösungsmittel wenigstens eines ist, ausgewählt aus einer Gruppe bestehend aus Pentan, Hexan und Heptan, und wobei das zweite organische Lösungsmittel wenigstens eines einschließt, ausgewählt aus einer Gruppe bestehend aus Octan, Nonan, Decan, Undecan, Dodecan und einem Isoparaffinlösungsmittel, einer Mischung aus Alkanen mit 8 bis 15 Kohlenstoffatomen.

2. Verfahren nach Anspruch 1, wobei die ersten und zweiten organischen Lösungsmittel nicht-polare Lösungsmittel sind.

3. Verfahren nach Anspruch 1, wobei ein Dampfdruck des ersten organischen Lösungsmittels bei 20°C 5 kPa bis 60 kPa ist und ein Dampfdruck des zweiten organischen Lösungsmittels bei 20°C 0,05 kPa bis 1,5 kPa ist.

## Revendications

1. Procédé de fabrication d'une membrane de séparation pour le traitement de l'eau, le procédé comprenant les étapes consistant à :
former une couche de solution aqueuse contenant un composé d'aminé déposé sur un support poreux ;
former une couche active de polyamide en mettant en contact une solution organique contenant un composé d'halogénure d'acyle et un premier solvant organique avec la couche de solution aqueuse ; et
appliquer, sur la couche active de polyamide, un deuxième solvant organique ayant un degré de volatilité inférieur à celui du premier solvant organique,
dans lequel l'application du deuxième solvant organique sur la couche active de polyamide consiste à former un polyamide par le biais d'une réaction de polymérisation interfaciale additionnelle entre des parties résiduelles du composé d'halogénure d'acyle et du composé d'aminé restant menée sur la couche active de polyamide,
dans lequel le premier solvant organique est au moins un membre sélectionné dans un groupe constitué de pentane, d'hexane et d'heptane,
et le deuxième solvant organique renferme au moins un membre sélectionné dans le groupe constitué d'octane, de nonane, de décane, d'undécane, de dodécane et d'un solvant isoparaffinique ainsi qu'un mélange d'alcanes portant 8 à 15 nombre de carbones.

2. Procédé selon la revendication 1, dans lequel les premier et deuxième solvants organiques sont des solvants non polaires.

3. Procédé selon la revendication 1, dans lequel une pression de vapeur du premier solvant organique à 20 °C est de 5 kPa à 60 kPa, et une pression de vapeur du deuxième solvant organique à 20 °C est de 0,05 kPa à 1,5 kPa.
